# EUROPEAN PATENT APPLICATION

(11) **EP 4 831 007 A1**
(43) Date of publication of application: **28.10.2026**
(21) Application number: 24905964.3
(22) Date of filing: 20.11.2024
(51) Int. Cl.: B60R 16/023

(54) **CONTROL SYSTEM AND VEHICLE**

(30) Priority: 21.12.2023 CN 202323515759 U
(71) Applicant: BYD Company Limited, Shenzhen, Guangdong 518118 (CN)
(72) Inventor: PENG, Wang, Shenzhen, Guangdong 518118 (CN); LV, Shujun, Shenzhen, Guangdong 518118 (CN); TAN, Xianhua, Shenzhen, Guangdong 518118 (CN); YAN, Junjie, Shenzhen, Guangdong 518118 (CN); LI, Lixuan, Shenzhen, Guangdong 518118 (CN)
(74) Representative: Taor, Simon Edward William
(86) International application number: PCT/CN2024/133175
(87) International publication number: WO 2025/130479

(57) **Abstract**

A control system and a vehicle are provided. The control system includes a body domain controller and a power domain controller of the vehicle. The body domain controller is configured to connect to a power control apparatus within a preset distance range. The body domain controller and the power domain controller are configured to be connected via a communication line. The body domain controller is configured to transmit, to the power domain controller via the communication line, a power control signal that is of the power control apparatus and that is acquired by the body domain controller, resolving an error in the transmission of an accelerator signal and a brake signal that is likely to occur when all signals are transmitted via a vehicle's CAN bus, thereby addressing safety problems of the vehicle and significantly improving safety performance of the vehicle.

## Description

This application claims priority to Chinese Patent Application No. 202323515759.7, filed with the China National Intellectual Property Administration on December 21, 2023 and entitled "CONTROL SYSTEM AND VEHICLE", which is incorporated herein by reference in its entirety.

### TECHNICAL FIELD

This disclosure generally relates to the field of vehicle technologies, and more specifically to a control system and a vehicle.

### BACKGROUND

Actual driving and use of a vehicle requires the cooperation of numerous components. Based on this, in conventional technologies, a vehicle is generally divided into multiple parts based on its functions and managed by a controller, in other words, components and signals of the vehicle are managed using a domain control architecture. For example, the vehicle may include a body domain, a chassis domain, and a power domain. The domains include respective controllers, namely, a body domain controller, a chassis domain controller, and a power domain controller. The entire vehicle is controlled through the cooperation between the controllers of the different domains.

In the foregoing process of collaboration between the controllers of the different domains, drive signals and brake signals are directly acquired by the power domain controller via a CAN bus.

However, in the foregoing process, for long-body vehicles, accelerator pedals and brake pedals are located in a driver's cab area, while power domain controllers are mostly located in the rear area. In this case, long-distance signal transmission is very likely to cause signal errors, leading to vehicle safety problems.

### SUMMARY

In view of the foregoing defects or deficiencies in conventional technologies, it is desirable to provide a control system and a vehicle that can resolve the problem of a signal error caused by long-distance acquisition of a drive signal and a brake signal by a power domain controller, thereby addressing safety problems of the vehicle. This can significantly improve safety performance of the vehicle.

According to a first aspect, a control system is provided and used in a vehicle. The system includes a body domain controller and a power domain controller of the vehicle.

The body domain controller is configured to connect to a power control apparatus within a preset distance range.

The body domain controller and the power domain controller are configured to be connected via a communication line.

The body domain controller is configured to transmit, to the power domain controller via the communication line, a power control signal that is of the power control apparatus and that is acquired by the body domain controller.

This application discloses the control system used in the vehicle. The control system includes the body domain controller and the power domain controller of the vehicle. Specifically, the body domain controller is configured to connect to the power control apparatus within the preset distance range, and the body domain controller and the power domain controller are configured to be connected via the communication line. The body domain controller is configured to transmit, to the power domain controller via the communication line, the power control signal that is of the power control apparatus and that is acquired by the body domain controller. In this way, the body domain controller is configured to: acquire the power control signal of the vehicle and transmit the power control signal via the point-to-point communication line between the body domain controller and the power domain controller, so that the power control signal is transmitted to the power domain controller via the communication line, thereby avoiding a possible error in acquisition of the power control signal by the vehicle and greatly improving vehicle safety.

According to a second aspect, a vehicle is provided, including the control system according to the first aspect. The control system is used to transmit a power control signal of the vehicle and control the vehicle based on the power control signal.

Additional aspects and advantages of this application are partly set forth in the description below, partly become apparent from the description below, or may be learned by practice of this application.

### BRIEF DESCRIPTION OF DRAWINGS

Other features, objects, and advantages of this application will become more apparent from the following detailed descriptions of non-limiting embodiments with reference to the accompanying drawings.
FIG. 1 is a diagram 1 of a control system according to an embodiment of this application;
FIG. 2 is a diagram 2 of a control system according to an embodiment of this application; and
FIG. 3 is a diagram 3 of a control system according to an embodiment of this application.

### DESCRIPTION OF EMBODIMENTS

The following describes in detail this application with reference to the accompanying drawings and embodiments. It may be understood that specific embodiments described herein are merely intended to explain a related application, but not to limit this application. In addition, it should be noted that, for ease of description, only a part related to this application is shown in the accompanying drawings.

It should be noted that, unless otherwise specified, embodiments in this application and features in embodiments can be combined with each other.

The following describes usage scenarios of this application.

In related technologies, a vehicle is generally divided into multiple parts, each managed by a controller. Different controllers function differently. Specifically, a body domain controller is configured to: control load drives and coordinate the activation of vehicle electrical appliances; a chassis domain controller is configured to control vehicle driving-related systems, including a transmission system, a driving system, a steering system, and an electronic parking brake system; and a power domain controller is configured to acquire a signal of an accelerator pedal and a signal of a brake pedal.

In related technologies, the power domain controller is configured to control movement and stopping of the vehicle. Based on this, a brake signal generated by the brake pedal and an accelerator signal generated by the accelerator pedal are directly acquired by the power domain controller; and a signal generated by an electronic parking brake (EPB, Electrical Park Brake) is directly acquired by the chassis domain controller.

However, the foregoing process has the following problems: The accelerator pedal that generates the accelerator signal and the brake pedal that generates the brake signal are actually located on the front of the vehicle, while the power domain controller is located on the rear of the vehicle. In terms of an acquisition distance, the power domain controller is located too far, particularly for some large vehicles (such as trucks), which is not conducive to signal acquisition.

In view of this, this application proposes a control system and a vehicle, resolving an error in the transmission of an accelerator signal and a brake signal that is likely to occur when a power domain controller acquires a drive signal and the brake signal over a long distance via a CAN bus, thereby addressing safety problems of the vehicle and significantly improving safety performance of the vehicle.

This application is described in detail with reference to the accompanying drawings and embodiments.

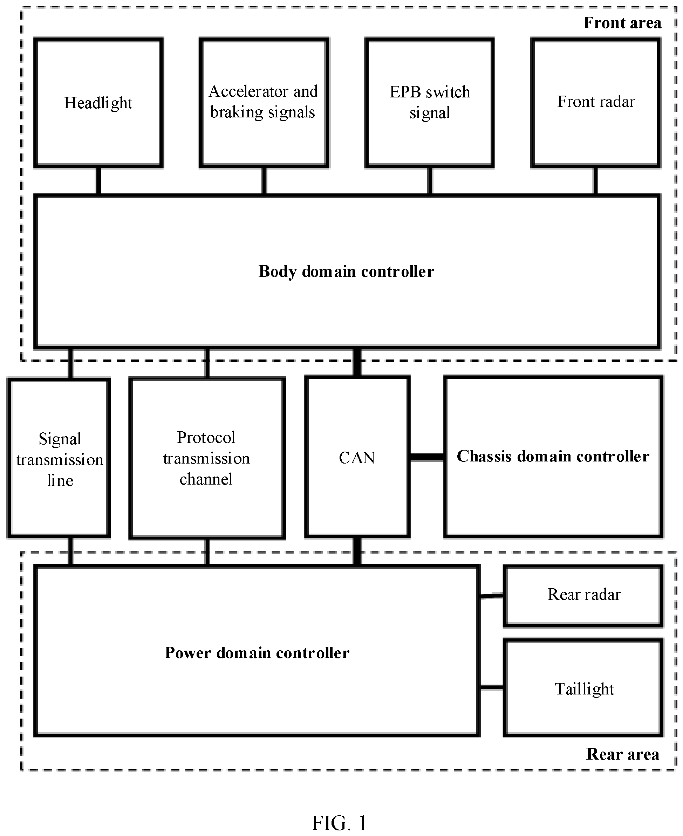

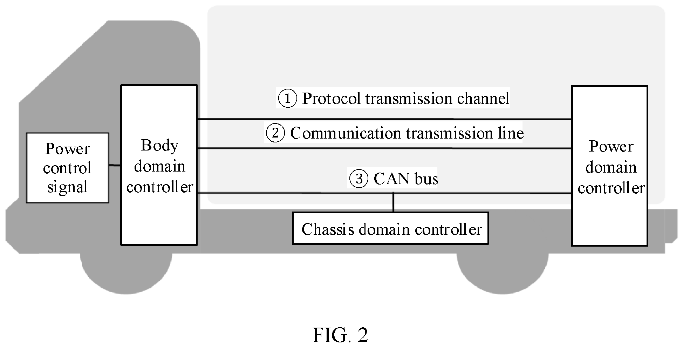

FIG. 1 and FIG. 2 each are a diagram of a control system according to an embodiment of this application. The method is performed by the foregoing vehicle. As shown in FIG. 1 and FIG. 2, the control system includes a body domain controller and a power domain controller of the vehicle.

In this embodiment of this application, the body domain controller is configured to connect to a power control apparatus within a preset distance range.

In this embodiment of this application, the body domain controller and the power domain controller are configured to be connected via a communication line.

In this embodiment of this application, the body domain controller is configured to transmit, to the power domain controller via the communication line, a power control signal that is of the power control apparatus and that is acquired by the body domain controller.

In this embodiment of this application, the body domain controller is configured to: acquire the power control signal of the power control apparatus in the vehicle, and send the power control signal to the power domain controller through a communication connection with the power domain controller.

In view of this, in this application, the body domain controller is configured to transmit, to the power domain controller via the communication line, the power control signal that is of the power control apparatus and that is acquired by the body domain controller, resolving an error in the transmission of an accelerator signal and a brake signal that is likely to occur when the power domain controller acquires a drive signal and the brake signal over a long distance via a CAN bus, thereby addressing safety problems of the vehicle and significantly improving safety performance of the vehicle.

Optionally, in this embodiment of this application, the body domain controller is located on the front of the vehicle, and the power domain controller is located on the rear of the vehicle.

Optionally, in this embodiment of this application, the power control apparatus includes at least one of an accelerator pedal apparatus and a brake pedal apparatus.

In this embodiment of this application, the power control signals include the vehicle's drive signal and brake signal.

It may be understood that the drive signal may include an accelerator signal. In an example, the drive signal may be a signal of an accelerator pedal. The brake signal may include a braking signal. In an example, the brake signal is a signal of a brake pedal.

Optionally, the power control signal includes at least one of the following: a drive start signal of the vehicle, a drive stop signal of the vehicle, a drive abnormality signal of the vehicle, a brake start signal of the vehicle, a brake stop signal of the vehicle, and a brake abnormality signal of the vehicle.

It may be understood that the drive start signal and the drive stop signal may be characterized by an angle of the accelerator pedal, and correspondingly the brake start signal and the brake stop signal may be characterized by an angle of the brake pedal. Further, the brake stop signal of the vehicle may include a signal related to an electronic parking brake.

Based on this, further, the drive signal may include at least one of the following: an accelerator pedal angle signal and an accelerator pedal fault signal. The brake signal may include at least one of the following: a brake pedal angle signal, a brake pedal fault signal, an electronic parking brake trigger signal, an electronic parking brake deactivation signal, and an electronic parking brake abnormality signal.

It may be understood that, in this embodiment of this application, the body domain controller is additionally provided with a function of acquiring the power control signal of the vehicle compared to related technologies. Generally, it may be learned from the foregoing content that the function of acquiring the power control signal is completed by another controller other than the body domain controller (for example, the accelerator signal and the braking signal are acquired by the power domain controller, and the electronic parking brake signal is acquired by a chassis domain controller). However, the another controller is far away from the power control apparatus of the vehicle. Based on this, in this embodiment of this application, after the function of acquiring the power control signal is integrated into the body domain controller according to a principle of acquiring signals from the nearest source, power control signals originally belonging to different domains may be acquired by only the body domain controller, thereby reducing signal acquisition costs (time costs, communication costs, hardware costs of connectors, and the like). Subsequently, the body domain controller transmits the acquired power control signal to a controller configured to control the power control signal, thereby enhancing accuracy of power control signal acquisition, and enhancing transmission and coordination of the power control signal.

In this embodiment of this application, the power domain controller is configured to: receive, via the communication line, the power control information sent by the power control apparatus, and control the vehicle based on the power control signal.

In this embodiment of this application, the power domain controller and the body domain controller may be connected via the communication line, that is, the signal may be transmitted directly in a point-to-point manner.

It may be understood that the point-to-point direct signal transmission means that the communication connection does not connect to any other domain controller. Instead, the communication connection directly connects the power domain controller to the body domain controller.

In this embodiment of this application, the communication connection may be a hardwired direct connection such as a connection via a signal transmission line, or may be a bus transmission method such as a bus protocol between the power domain controller and the body domain controller. This is not limited in embodiments of this application. Details are provided below.

The control system provided in this embodiment of this application and used in the vehicle includes the body domain controller and the power domain controller of the vehicle. Specifically, the body domain controller is configured to: acquire the power control signal of the power control apparatus in the vehicle (the power control signal includes the drive signal and the brake signal of the vehicle), and send the power control signal to the power domain controller via the communication connection with the power domain controller. The power domain controller is configured to: receive the power control signal via the communication connection, and control the vehicle based on the power control signal. In this way, the body domain controller is configured to: acquire the power control signal of the vehicle and transmit the power control signal via the point-to-point connection between the body domain controller and the power domain controller, so that the power control signal is transmitted to the power domain controller via a dedicated line, thereby avoiding a possible error in acquisition of the power control signal by the vehicle and greatly improving vehicle safety.

Optionally, in this embodiment of this application, the communication line includes at least two of the following: a general-purpose signal bus, a dedicated power control signal bus, and a hardwired signal line.

For example, the dedicated power control signal bus and the hardwired signal line are configured to transmit the power control signal only.

For example, in this embodiment of this application, the accelerator pedal apparatus is configured to connect to the body domain controller via at least two signal acquisition lines; and/or the brake pedal apparatus is configured to connect to the body domain controller via at least two signal acquisition lines.

Usually, the accelerator pedal apparatus and the brake pedal apparatus are located on the front of the vehicle. In other words, the accelerator pedal apparatus and the brake pedal apparatus are close to the body domain controller. Therefore, the accelerator pedal apparatus and the brake pedal apparatus are separately connected to the body domain controller. Further, in this embodiment of this application, the accelerator pedal apparatus needs to connect to the body domain controller via at least two signal acquisition lines; and/or the brake pedal apparatus is configured to connect to the body domain controller via at least two signal acquisition lines.

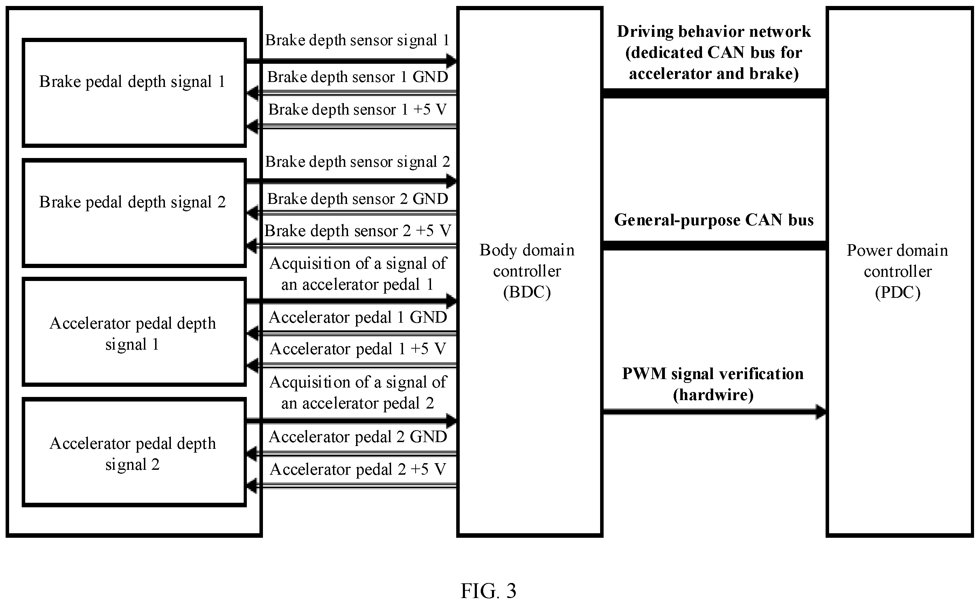

As shown in FIG. 3, the accelerator pedal apparatus corresponds two signal lines: a signal line of an accelerator pedal depth signal 1 and a signal line of an accelerator pedal depth signal 2; and the brake pedal apparatus corresponds two signal lines: a signal line of a brake pedal depth signal 1 and a signal line of a brake pedal depth signal 2. The signal line of the accelerator pedal depth signal 1 is used to transmit a signal of an accelerator pedal 1, and the signal line of the accelerator pedal depth signal 2 is used to transmit a signal of an accelerator pedal 2. Correspondingly, the signal line of the brake pedal depth signal 1 is used to transmit a brake depth sensor signal 1, and the signal line of the brake pedal depth signal 2 is used to transmit a brake depth sensor signal 2. Then, the body domain controller transmits a power control signal of the accelerator pedal and a power control signal of the brake pedal to the power domain controller. A method by which the body domain controller transmits the signals to the power domain controller is described in detail later and is not repeated here.

It may be understood that the communication line includes at least two of the following: the general-purpose signal bus, the dedicated power control signal bus, and the hardwired signal line. Correspondingly, the accelerator pedal apparatus needs to connect to the body domain controller via the at least two signal acquisition lines during signal transmission, so that at least two types of signals may be output. Similarly, the brake pedal apparatus needs to connect to the body domain controller via the at least two signal acquisition lines during signal transmission, so that at least two types of signals may be output.

In another embodiment of this application, three specific implementations of the communication connection are further provided.

Optionally, in this embodiment of this application, the general-purpose signal bus and the dedicated power control signal bus are configured to transmit the power control signal based on different bus protocols.

It may be understood that the general-purpose signal bus needs to transmit all signals of the entire vehicle. Thus, a transmission error or delay is likely to occur during transmission of the power control signals via the communication signal bus. Consequently, the power control signals cannot be received in time, which may prevent the entire vehicle from being powered in time, posing a safety hazard and potentially causing a vehicle accident. Therefore, configuring the general-purpose signal bus and the dedicated power control signal bus corresponding to the power control signal to use different bus protocols can maintain the two buses independent. In other words, the power control signals are transmitted via their own dedicated bus protocol, thereby improving accuracy and timeliness of power control signal transmission.

In an example, the bus protocols may include any one of a CAN bus protocol, a LIN bus protocol, a FlexRay bus protocol, and a MOST bus protocol. The general-purpose signal bus and the dedicated power control signal bus use different bus protocols.

For example, the dedicated power control signal bus is used to transmit the power control signal of the vehicle via a communication protocol.

In an example, the dedicated power control signal bus may be a point-to-point CAN dedicated line between the body domain controller and the power domain controller, and the CAN dedicated line belongs to a driving behavior CAN network.

It may be understood that the dedicated power control signal bus is specifically used to transmit signals between the power domain controller and the body domain controller. It should be noted that, as mentioned above, a vehicle with a domain control architecture (namely, a vehicle controlled as per multiple domains) is generally provided with a CAN bus (that is, a second protocol transmission channel mentioned below) for transmitting signals between different domains. The CAN dedicated line serving as the dedicated power control signal bus is a CAN dedicated line specifically for use between the body domain controller and the power domain controller.

Further, the CAN dedicated line may be implemented by modifying related protocol algorithms of the CAN bus of the vehicle, without changing hardware of the vehicle.

Optionally, the control system may further include a first transceiver and a second transceiver.

For example, the first transceiver is configured to transmit the power control signal of the body domain controller, and the second transceiver is configured to transmit the control signal of the power domain controller.

For example, the first transceiver and the second transceiver are respectively connected to both sides of the communication connection.

It may be understood that the first transceiver and the second transceiver may be configured to transmit signals on the both sides of the communication connection.

For example, it is assumed that the power control signal is an accelerator start signal. If the accelerator pedal is depressed to an accelerator pedal angle of X°, after the body domain controller acquires an analog signal of the accelerator pedal angle, the body domain controller sends, based on an output percentage P, a pedal depth corresponding to the accelerator pedal angle. The body domain controller sends an accelerator depth signal to the power domain controller via the CAN dedicated line (namely, the dedicated power control signal bus), to help the power domain controller control the vehicle.

For example, it is assumed that the power control signal is the brake start signal. If the brake pedal is depressed to a brake pedal angle of Y°, after the body domain controller acquires an analog signal of the brake pedal angle, the body domain controller sends, based on an output percentage Q, a pedal depth corresponding to the brake pedal angle, and the body domain controller sends an accelerator depth signal to the power domain controller via the CAN dedicated line, to help the power domain controller control the vehicle.

It is assumed that the accelerator pedal is faulty. The accelerator pedal is generally of a dual-channel type. A first channel of depth signal of the accelerator pedal requires a synchronization check with a second channel of depth signal of the accelerator pedal. If specific synchronization is not met, the accelerator pedal is considered to be faulty. The body domain controller acquires an abnormal signal and sends a fault message regarding the accelerator pedal to the power domain controller, to help the power domain controller control the vehicle.

It is assumed that the brake pedal is faulty. In this case, it is determined whether a brake pedal depth signal is within a specific range. If the brake pedal depth signal exceeds the range, or if either the brake pedal depth signal or a brake pedal switch signal is off-line, the pedal signal is abnormal. The body domain controller acquires an abnormal signal and sends a pedal abnormality message to the power domain controller, to help the power domain controller control the vehicle.

This can implement safer vehicle control and driving at extremely low costs because a protocol transmission channel does not cause an excessive increase in hardware costs.

Optionally, in this embodiment of this application, the hardwired signal line is configured to transmit the power control signal based on a pulse width modulation signal.

For example, the body domain controller and the power domain controller are connected via the hardwired signal line.

For example, the signal transmission line is used to transmit the power control signal based on the pulse width modulation signal. In an example, the pulse width modulation signal based on which the power control signal is transmitted may be a first pulse width modulation (Pulse Width Modulation, PWM) signal, that is, the first pulse width modulation signal indicates the power control signal.

It may be understood that as mentioned above, there are a variety of different types of power control signals, and different power control signals correspond to different first PWM signals. Therefore, the different PWM signals may represent the different power control signals.

In an example, the first PWM signal may be a duty cycle signal with a specific amplitude and a specific frequency. For example, the first PWM signal may be a duty cycle signal with an amplitude of 12 V and a frequency of 1 kHz.

For example, it is assumed that the power control signal is an accelerator start signal. If the accelerator pedal is depressed to an accelerator pedal angle of X°, a PWM signal with a duty cycle of α1 may be sent to the power domain controller via the signal transmission line, to help the power domain controller control the vehicle.

For example, it is assumed that the power control signal is a brake start signal. If the brake pedal is depressed to a brake pedal angle of Y°, a PWM signal with a duty cycle of α2 may be sent to the power domain controller via the signal transmission line, to help the power domain controller control the vehicle.

It is assumed that the accelerator pedal angle and the brake pedal angle are both 0°. In this case, a PWM signal with a duty cycle of α3 may be sent to the power domain controller via the signal transmission line, to help the power domain controller control the vehicle.

It is assumed that the accelerator pedal is faulty. In this case, a PWM signal with a duty cycle of α4 may be sent to the power domain controller via the signal transmission line, to help the power domain controller control the vehicle.

It is assumed that the brake pedal is faulty. In this case, a PWM signal with a duty cycle of α5 may be sent to the power domain controller via the signal transmission line, to help the power domain controller control the vehicle.

Optionally, in a third implementation of the communication connection, the communication connection includes the signal transmission line and the dedicated power control signal bus.

For example, when the power control signal transmitted via the dedicated power control signal bus lacks a signal frame, the communication connection includes the signal transmission line and the dedicated power control signal bus.

For example, the first pulse width modulation signal transmitted via the signal transmission line is a verification signal of the power control signal transmitted based on the communication protocol.

For example, the power domain controller is configured to: compare the first pulse width modulation signal with the power control signal, and when the first pulse width modulation signal matches the power control signal, determine an accelerator status and/or a brake status of the vehicle.

It may be understood that when the communication connection includes both the signal transmission line and the dedicated power control signal bus, the first pulse width modulation signal transmitted via the signal transmission line and the power control signal transmitted based on the first communication protocol may be mutually verified.

Optionally, for the first communication protocol, pedal depth information corresponding to the power control signal and the first pulse width modulation signal transmitted via the signal transmission line may be mutually verified.

For example, the pedal depth information corresponding to the power control signal and the first pulse width modulation signal corresponding to the power control signal indicate the drive signal.

Further, the pedal depth information includes drive pedal depth information and brake pedal depth information.

In an example, the drive pedal depth information may be accelerator pedal depth information, and the brake pedal depth information may be braking pedal depth information.

For example, the body domain controller is configured to: send the drive pedal depth information to the power domain controller via the dedicated power control signal bus, and send the first pulse width modulation signal to the power domain controller via the signal transmission line.

For example, the power domain controller is configured to: receive the pedal depth information and the first pulse width modulation signal, and when the first depth information matches the first pulse width modulation signal, determine that the vehicle executes the drive signal.

For example, it is assumed that the power control signal is an accelerator start signal. If the accelerator pedal is depressed to an accelerator pedal angle of X°, after the body domain controller acquires an analog signal of the accelerator pedal angle, the body domain controller sends, based on an output percentage P, a pedal depth corresponding to the accelerator pedal angle. The body domain controller sends an accelerator depth signal to the power domain controller via the CAN dedicated line (namely, the dedicated power control signal bus), and sends a PWM signal with a duty cycle of α1 to the power domain controller via the signal transmission line. The power domain controller compares the accelerator depth signal with α1 to determine if they match, to perform mutual verification. If they match, the power domain controller controls the vehicle to activate the accelerator.

It is assumed that the power control signal is the brake start signal. If the brake pedal is depressed to a brake pedal angle of Y°, after the body domain controller acquires an analog signal of the brake pedal angle, the body domain controller sends, based on an output percentage Q, a pedal depth corresponding to the brake pedal angle, sends an accelerator depth signal to the power domain controller via the CAN dedicated line, and sends a PWM signal with a duty cycle of α2 to the power domain controller via the signal transmission line. The power domain controller compares the accelerator depth signal with α2 to determine if they match, to perform mutual verification, so that the power domain controller controls the vehicle to activate the accelerator.

It is assumed that the accelerator pedal is faulty. The accelerator pedal is generally of a dual-channel type. A first channel of depth signal of the accelerator pedal requires a synchronization check with a second channel of depth signal of the accelerator pedal. If specific synchronization is not met, the accelerator pedal is considered to be faulty. The body domain controller acquires an abnormal signal and sends a fault message regarding the accelerator pedal to the power domain controller. In addition, the body domain controller may send a PWM signal with a duty cycle of α4 to the power domain controller via the signal transmission line. The power domain controller compares the accelerator depth signal with α4 to determine if they match, to perform mutual verification, so that the power domain controller controls the vehicle to promptly inform a user that the accelerator pedal is faulty.

It is assumed that the brake pedal is faulty. In this case, it is determined whether a brake pedal depth signal is within a specific range. If the brake pedal depth signal exceeds the range, or if either the brake pedal depth signal or a brake pedal switch signal is off-line, the pedal signal is abnormal. The body domain controller acquires an abnormal signal and sends a pedal abnormality message to the power domain controller. In addition, the body domain controller may send a PWM signal with a duty cycle of α5 to the power domain controller via the signal transmission line. The power domain controller compares the accelerator depth signal with α5 to determine whether they match, thereby performing mutual verification, so that the power domain controller can control the vehicle to promptly inform a user that the brake pedal is faulty.

In this way, during signal transmission, the signal transmission line and the dedicated power control signal bus are combined to perform mutual verification, thereby increasing reliability, overall safety, and an anti-interference capability of transmitting the power control signal by the vehicle.

Optionally, in this embodiment of this application, in addition to the three connection methods, a fourth connection method may be included, that is, the control system includes the dedicated power control signal bus, the signal transmission line, and the general-purpose signal bus. The general-purpose signal bus may be a CAN bus.

For example, the general-purpose signal bus includes a serial communication protocol bus of the vehicle.

For example, when neither the dedicated power control signal bus nor the signal transmission line of the vehicle can transmit the power control signal, the body domain controller is configured to transmit the power control signal of the vehicle via the general-purpose signal bus.

As described above, the dedicated power control signal bus is used to transmit the power control signal of the vehicle via a communication protocol between the power domain controller and the body domain controller. The signal transmission line is used to transmit the first pulse width modulation signal, and the first pulse width modulation signal indicates the power control signal.

In this way, as protocol transmission channels, the CAN bus and the signal transmission line are combined to perform mutual verification, thereby greatly increasing reliability, overall safety, and an anti-interference capability of communication signals.

It may be understood that, in the four communication connection methods, different power control signals are acquired based on different communication combinations, to ensure safe transmission of accelerator and braking signals and avoid a safety hazard caused by abnormal communication of a single CAN bus.

Optionally, if all four communication connection methods are invalid, the vehicle can automatically activate a safety mode to ensure safety of people inside the vehicle.

For example, in the event of an interruption in the communication connection between the body domain controller and the power domain controller, the body domain controller is configured to determine that the communication connection is damaged and activate the safety mode of the vehicle.

The safety mode includes any of the following: reducing a speed of the vehicle to a preset speed range, reducing the speed of the vehicle to zero within preset duration, and maintaining the vehicle in a stationary state.

It may be understood that the vehicles may be in a moving state or a stationary state. When the vehicle is in a moving state, the safety mode of the vehicle may be to switch the moving state to a low-speed state or a stationary state. Specifically, the vehicle may be brought into the low-speed state by reducing the speed of the vehicle to the preset speed range, or brought into the stationary state by reducing the speed of the vehicle to zero within the preset duration. When the vehicle is in a stationary state, the safety mode is to maintain the vehicle in the stationary state.

Optionally, in this embodiment of this application, the power domain controller is configured to use the received power control signal as a target power control signal to control the vehicle based on a communication line priority.

For example, the communication line priority in descending order is the dedicated power control signal bus, the hardwired signal line, and the general-purpose signal bus.

It may be understood that, during practical application, an order in which the communication lines are used has a specific priority. To be specific, when the vehicle is likely to be provided with all three types of communication lines, namely, the dedicated power control signal bus, the hardwired signal line, and the general-purpose signal bus, the dedicated power control signal bus is used first, followed by the hardwired signal line, and lastly the general-purpose signal bus.

Optionally, in this embodiment of this application, a distance between the power control apparatus and the power domain controller exceeds the preset distance range.

For example, a distance between the power control apparatus and the body domain controller is less than the preset distance range.

For example, the preset distance range can be user-defined or preset by the control system. This is not limited in embodiments of this application.

For example, the preset distance range may match a distance of commonly available vehicle models on the market. For example, the preset distance range may be set as a distance range, between a power domain controller and a body domain controller, corresponding to a truck.

It may be understood that, in an example, the premise for the body domain controller acquiring the power control signal and serving as a central controller for the power control signal of the vehicle is that the power domain controller is located excessively far from a pedal that generates the accelerator signal and a pedal that generates the braking signal, making signal transmission prone to problems (for example, the distance between the power domain controller and the power control apparatus exceeds a preset threshold). Based on this, the premise for using the foregoing communication connection may include that a distance between the power domain controller and the body domain controller is greater than a predetermined threshold.

Further, because the distance between the power domain controller and the power control apparatus is greater than the preset distance range, the body domain controller whose distance from the power control apparatus is less than the preset distance range is required to serve as an acquisition controller (namely, the central controller). To be specific, the body domain controller, serving as the acquisition controller, first locally acquires the power control signal of the power control apparatus, and then transmits the power control signal to the power domain controller via the communication connection between the body domain controller and the power domain controller.

An embodiment in this application further provides a vehicle. The vehicle includes the control system. The control system is used to transmit the power control signal of the vehicle between the body domain controller of the vehicle and the power domain controller of the vehicle, and control the vehicle based on the power control signal.

It should be noted that, although functions of the modules in this application are described in a particular order in the accompanying drawings, this does not require or imply that these operations need to be performed in the particular order, or that all the shown operations need to be performed to achieve desired results.

It should be understood that the units described in the control system correspond to the functions of the modules described in the accompanying drawings. Therefore, the operations and features described for the method also apply to the control system and the units included therein, and will not be repeated here. The control system may be pre-implemented in a browser or other security applications of a computer device, or may be loaded into the browser or other security applications of the computer device through downloading. The corresponding units in the control system may cooperate with the units in the computer device to implement the solutions in embodiments in this application.

Division into the modules or units in detailed descriptions above is not mandatory. In fact, according to this disclosure, the features and functions of the two or more modules or units described above can be embodied in one module or unit. Conversely, the features and functions of a module or unit described above may be further divided into multiple modules or units for specific purposes.

It should be noted that, for details not disclosed in the control system in this embodiment of this application, refer to the details disclosed in embodiments of this application, which will not be repeated here.

The units or modules described in this embodiment of this application may be implemented by using software or hardware. The described unit or module may alternatively be disposed in a processor. For example, it can be described as: A control system includes a first receiving module, a second receiving module, and a sending module. In some cases, names of these units or modules do not constitute a limitation on the units or modules themselves.

The foregoing description is merely a preferred embodiment of this application and an explanation of the technical principles employed. Those skilled in the art will appreciate that the scope disclosed in this application is not limited to the technical solutions formed by a specific combination of the foregoing technical features, but should also cover other technical solutions formed by any combination of the foregoing technical features or their equivalents without departing from the disclosed concept, for example, a technical solution formed by replacing the foregoing features with technical features with similar functions disclosed in this application (but not limited thereto).

## Claims

1. A control system, used in a vehicle, wherein the control system comprises a body domain controller and a power domain controller of the vehicle;
the body domain controller is configured to connect to a power control apparatus within a preset distance range;
the body domain controller and the power domain controller are configured to be connected via a communication line; and
the body domain controller is configured to transmit, to the power domain controller via the communication line, a power control signal that is of the power control apparatus and that is acquired by the body domain controller.

2. The control system according to claim 1, wherein the communication line comprises at least two of:
a general-purpose signal bus;
a dedicated power control signal bus; and
a hardwired signal line, wherein
the dedicated power control signal bus and the hardwired signal line are configured to transmit the power control signal only.

3. The control system according to claim 2, wherein the general-purpose signal bus and the dedicated power control signal bus are configured to transmit the power control signal based on different bus protocols.

4. The control system according to claim 2 or 3, wherein the hardwired signal line is configured to transmit the power control signal based on a pulse width modulation signal.

5. The control system according to any one of claims 1 to 4, wherein the power domain controller is configured to:
use the received power control signal as a target power control signal to control the vehicle based on a communication line priority, wherein
the communication line priority in descending order is the dedicated power control signal bus, the hardwired signal line, and the general-purpose signal bus.

6. The control system according to any one of claims 1 to 5, wherein a distance between the power control apparatus and the power domain controller exceeds the preset distance range.

7. The control system according to any one of claims 1 to 6, wherein
the body domain controller is located on the front of the vehicle; and
the power domain controller is located on the rear of the vehicle.

8. The control system according to any one of claims 1 to 7, wherein the power control apparatus comprises at least one of an accelerator pedal apparatus and a brake pedal apparatus.

9. The control system according to claim 8, wherein
the accelerator pedal apparatus is configured to connect to the body domain controller via at least two signal acquisition lines; and/or
the brake pedal apparatus is configured to connect to the body domain controller via at least two signal acquisition lines.

10. A vehicle, comprising the control system according to any one of claims 1 to 9, and the control system being configured to: exchange the power control signal of the vehicle between the body domain controller of the vehicle and the power domain controller of the vehicle, and control the vehicle based on the power control signal.
